# EUROPÄISCHE PATENTSCHRIFT

(11) **EP 4 756 276 B1**
(45) Veröffentlichungstag und Bekanntmachung des Hinweises auf die Patenterteilung: **25.11.2026**
(21) Anmeldenummer: 24218483.6
(22) Anmeldetag: 09.12.2024
(51) Int. Cl.: F16L 19/12

(54) **VERBINDUNGSANORDNUNG UND VERFAHREN ZU DESSEN HERSTELLUNG**
CONNECTING DEVICE AND METHOD FOR PRODUCING THE SAME
DISPOSITIF DE RACCORDEMENT ET PROCÉDÉ POUR SA PRODUCTION

(43) Veröffentlichungstag der Anmeldung: 10.06.2026
(73) Patentinhaber: WALTER STAUFFENBERG GMBH & CO. KG, 58791 Werdohl (DE)
(72) Erfinder: Herr König, Ulrich Stefan, 58849 Herscheid (DE); Herr Aul, Alexander, 59423 Unna (DE)
(74) Vertreter: Patentanwälte Dörner & Kötter PartG mbB

(56) Entgegenhaltungen:
- DE-U1- 9 409 533
- US-A- 4 754 995
- US-A- 5 954 375
- US-A1- 2023 135 481
- US-B1- 7 806 443

## Beschreibung

Die Erfindung betrifft eine Verbindungsanordnung nach dem Patentanspruch 1. Die Erfindung betrifft weiterhin ein Verfahren zur Herstellung einer Verbindungsanordnung nach dem Patentanspruch 4.

Bei der Herstellung von Eisenbahnwaggons werden unterhalb sowie auch innerhalb der Waggons lange Rohrleitungen verbaut, die zur Versorgung und Weiterleitung von Brems-, Klima- und Hydrauliksystemen innerhalb eines Zuges erforderlich sind. Durch die großen Längen der Waggons einerseits und die Längen und Zusammenbauten der Rohrleitungskomponenten andererseits besteht beim Einbau des "letzten" Rohrstücks der Rohrleitung häufig die Problematik, dass die Rohrenden der installierten Rohrleitung des Wagons zu lang oder zu kurz sind. Hierdurch bedingt sind zeitaufwändige und fehleranfällige individuelle Anpassungen erforderlich. Hierbei wird die Länge des "letzten" Rohrstücks vermessen und entsprechend zugeschnitten. In dem Fall, dass das zugeschnittene Rohrstück nicht einwandfrei passt, kann es zu Leckagen kommen, die sich wiederum nur sehr aufwändig beseitigen lassen oder die erst später im Betrieb auftreten, wodurch Folgeschäden bedingt sein können.

Zur Verbindung von Rohrstücken werden derzeit regelmäßig sogenannte VEBEO-Verschraubungen, auch Klemmringverschraubung genannt, verwendet, wie sie beispielsweise in "Knorr-Bremse-Handbuch Schienenfahrzeuge", Ausgabe 1976 beschrieben ist. Diese Verschraubung umfasst eine Verbindungsmuffe, die an beiden Enden mit einem Außengewinde versehen ist und deren Durchgangsbohrung an beiden Enden über einen Absatz in eine konisch sich nach außen erweiternde Bohrung übergeht, sowie zwei Überwurfmuttern, die jeweils einen Stahlring, eine an diesem anliegende Scheibe sowie einen an der Scheibe anliegenden Dichtring aufnehmen. Die beiden Überwurfmuttern weisen jeweils eine kegelige Bohrung auf, die sich zur kegeligen Bohrung der Verbindungsmuffe entgegengesetzt verjüngt.

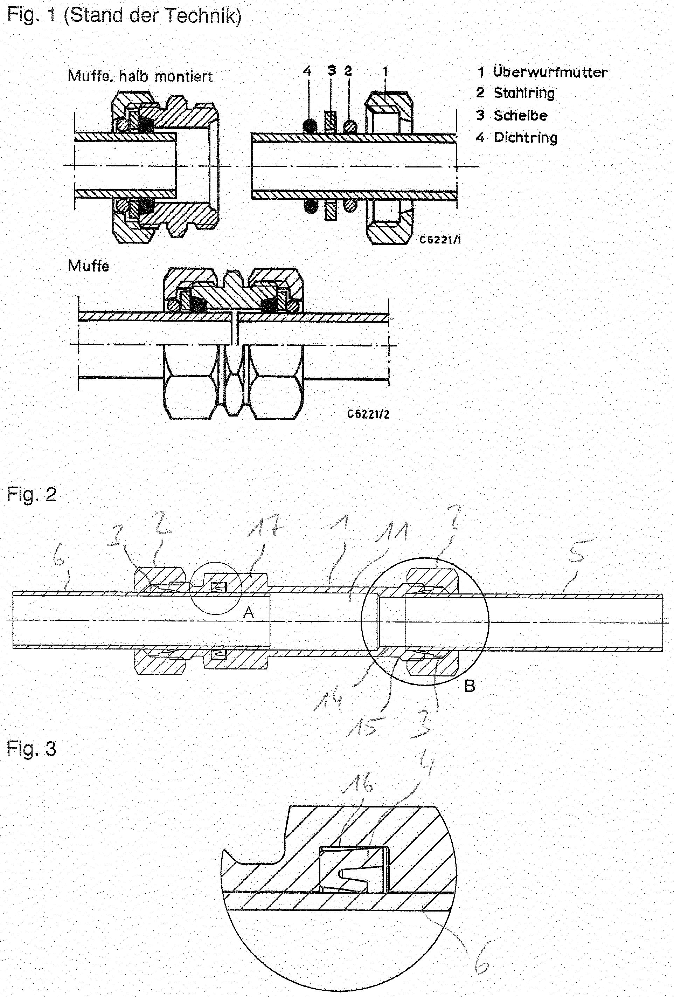

Die zu verbindenden Rohrstücke werden von beiden Seiten durch die Bohrung jeweils einer Überwurfmutter in die Verbindungsmuffe geschoben, wonach die Überwurfmuttern auf die Verbindungsmuffe aufgeschraubt und festgezogen werden. Hierdurch wird der Dichtring in die kegelige Bohrung an den Absatz gepresst und ist so zwischen dem Absatz und der Scheibe axial gehalten. Dabei liegt der Stahlring in der kegeligen Bohrung der Überwurfmutter an und wird durch diese sowohl axial an die Scheibe, als auch radial gegen das Rohrstück gepresst. Eine Darstellung einer VEBEO-Verschraubung aus dem Knorr-Bremse-Handbuch Schienenfahrzeuge ist in Figur 1 wiedergegeben.

Weitere Verbindungsanordnungen sind in der US 5 954 375 A, der US 7 806 443 B1 sowie der DE 94 09 533 U1 beschrieben.

Nachteilig an der vorbekannten Vorrichtung ist, dass diese nur einen geringen Längentoleranzausgleich ermöglicht. Hier setzt die vorliegende Erfindung an. Der Erfindung liegt die Aufgabe zu Grunde, eine Verbindungsanordnung, insbesondere zur Herstellung einer Hydraulik- oder Pneumatikrohrleitung zu schaffen, die einen verbesserten Längentoleranzausgleich zwischen den beiden zu verbindenden Rohrstücken ermöglicht. Gemäß der Erfindung wird diese Aufgabe durch eine Verbindungsanordnung mit den Merkmalen des Patentanspruchs 1 gelöst.

Mit der Erfindung ist eine Verbindungsanordnung, insbesondere zur Herstellung einer Hydraulik- oder Pneumatikrohrleitung geschaffen, die einen verbesserten Längentoleranzausgleich zwischen den beiden zu verbindenden Rohrstücken ermöglicht. Dadurch, dass in den Überwurfmuttern jeweils ein Schneidring angeordnet ist, der einen konischen Abschnitt aufweist, der im auf den Verbindungskörper aufgeschraubten Zustand der Überwurfmutter in die kegelige Bohrung des Verbindungskörpers hineinragt und der ein Schneidelement mit wenigstens einer Schneide aufweist, ist bei unterschiedlicher Beabstandung der beiden Rohrstücke eine Verbindung zwischen Schneidring und Rohrstück erzielt, wodurch eine axiale Fixierung sowie eine metallische Dichtung bewirkt ist. Durch Einschneiden des Schneidrings in das Rohrstück und durch die, je nach Wandstärke des Rohrstücks, geringfügige Rohrverformung wird das Rohrstück in der aktuellen Position fixiert. Die Verbindung dichtet durch die Vorspannung des Schneidrings ab, die Dichtigkeit der metallischen Dichtung ist gegeben. Durch den in der Bohrung vorhandenen umlaufenden Nut eingebrachten Dichtring ist zusätzlich eine weichdichtende Dichtung erzielt, wodurch eine zusätzliche Sicherheit der Dichtigkeit bewirkt ist.

In der zylindrischen Bohrung des Verbindungskörpers ist an einem ersten Ende beabstandet zu der kegeligen Bohrung ein durchmesserreduzierter Abschnitt vorhanden, durch den ein Anschlag für ein einzubringendes Rohrstück gebildet ist. Hierdurch ist eine definierte Positionierung eines Rohrstücks in dem Verbindungskörper ermöglicht. Nach Befestigung dieses Rohrstücks in dem Verbindungskörper kann dieser auf das zweite Rohrstück aufgeschoben und nachfolgend die gewünschte Positionierung des Verbindungskörpers zu Realisierung des erforderlichen Längenausgleichs erfolgten, in der sodann die Fixierung mittels Aufschrauben der zugeordneten Überwurfmutter auf den Verbindungskörper erfolgt, wodurch wiederum der Schneidring in die Mantelfläche des Rohrstücks einschneidet und eine metallische Dichtung bewirkt. Durch Ausgestaltung des Schneidrings als metallisch- und weichdichtender Schneidring ist eine metallische und weichdichtende Dichtung zwischen Schneidring und Rohrstück erzielbar.

Die in der Bohrung angeordnete umlaufende Nut, in die der Dichtring eingebracht ist, ist bevorzugt dem Anschlag gegenüberliegend nah an dem Außengewinde des Verbindungskörpers positioniert. Hierdurch ist bei jeder Positionierung der zweiten Rohrstücks in dem Verbindungskörper eine weichdichtende Dichtung gewährleistet. Auch im Falle von ungeplanten Rohrstößen, die zu einem Gleiten des Rohrstücks innerhalb der Bohrung des Verbindungskörpers führen, ist durch diesen Dichtring das Risiko einer Leckage ausgeschlossen.

In Ausgestaltung der Erfindung ist der Verbindungskörper im Bereich der wenigstens einen Nut außendurchmesservergrößert ausgebildet. Hierdurch ist eine vergrößerte Wandstärke bewirkt, wodurch auch innerhalb der Nut eine ausreichende Wandstärke gewährleistet ist.

In weiterer Ausgestaltung der Erfindung weist der Verbindungskörper außen vorzugsweise in einem mittleren Abschnitt einen zumindest bereichsweise radial umlaufenden Steg oder eine zumindest bereichsweise radial umlaufende Rille auf. Hierdurch ist eine Orientierung der Längsposition eines Rohrstücks gebildet. Diese ermöglicht beispielsweise eine Funktionsgewährleistung bei einer Positionierung des Rohrstücks in einem definierten Abstand beidseitig dieses Steges. An Stelle des Steges kann auch eine umlaufende Rille oder eine sonstige zumindest bereichsweise umlaufende Kennzeichnung angeordnet sein.

An dem in der zylindrischen Bohrung des Verbindungskörpers an einem ersten Ende beabstandet zu der kegeligen Bohrung vorhandenen durchmesserreduzierten Abschnitt liegt-eines der Rohrstücke an, wobei das zweite Rohrstück tiefer in die zylindrische Bohrung des Verbindungskörpers hineinragt, als das erste Rohrstück und wobei zumindest das zweite Rohrstück durch einen in der radialen Nut der Bohrung angeordneten Dichtring zusätzlich gegenüber dem Verbindungskörper abgedichtet ist. Dabei ist das zweite Rohrstück entsprechend des erforderlichen Längenausgleichs in dem Verbindungskörper fixiert.

Gegenstand der Erfindung ist weiterhin ein Verfahren zur Herstellung einer solchen Verbindungsanordnung mit den Merkmalen des Patentanspruchs 4.-Dabei wird das erste Rohr vor dessen Fixierung soweit in die zylindrische Bohrung des Verbindungskörpers eingeschoben, bis es an einem Absatz anliegt, der durch einen an dem ersten Ende beabstandet zu der kegeligen Bohrung vorhandenen durchmesserreduzierter Abschnitt gebildet ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1:: die Darstellung einer VEBEO-Verschraubung nach dem Stand der Technik (aus: Knorr-Bremse-Handbuch Schienenfahrzeuge", Ausgabe 1976);
- Figur 2:: die schematische Darstellung einer erfindungsgemäßen Verbindungsanordnungzweier Rohrstücke;
- Figur 3:: die Detaildarstellung des Ausschnitts A der Verbindungsanordnung aus Figur 1 und
- Figur 4:: die Detaildarstellung des Ausschnitts B der Verbindungsanordnung aus Figur 1.
- Figur 5:: die schematische Darstellung einer Verbindungsanordnung zweier Rohrstücke in einer weiteren, nicht im Rahmen der

- Erfindung liegenden: Ausführungsform;

- Figur 6:: die Detaildarstellung der Verbindungsanordnung aus Figur 5
a) in Ausschnitt A;
b) in Ausschnitt B.

Die als Ausführungsbeispiel gewählte Vorrichtung zur Verbindung zweier Rohrstücke besteht im Wesentlichen aus einem Verbindungskörper 1, zwei identisch ausgebildeten Überwurfmuttern 2 sowie zwei identisch ausgebildeten Schneidringen 3.

Der Verbindungskörper 1 ist im Wesentlichen hohlzylindrisch ausgebildet und weist eine Durchgangsbohrung 11 auf, die an beiden Enden in eine sich nach außen hin erweiternde kegelige Bohrung 12 übergeht. Außen in der Verbindungskörper 1 an beiden Enden mit einem Außengewinde 13 versehen. Innen weist die Durchgangsbohrung an einem ersten Ende beabstandet zu der kegeligen Bohrung 12 einen durchmesserreduzierten Abschnitt 14 auf, durch den ein Absatz 15 gebildet ist. An ihrem anderen, zweiten Ende ist in der Durchgangsbohrung 11 beabstandet zu der kegeligen Bohrung 12 eine radial umlaufende Nut 16 vorhanden, in die ein Dichtring 4 eingebracht ist. Im Ausführungsbeispiel ist der Dichtring als Lippendichtring ausgebildet. Selbstverständlich ist auch der Einsatz anderer im Stand der Technik bekannter Dichtringe, beispielsweises eines O-Rings möglich. Außen weist der Verbindungskörper 1 im Bereich der umlaufenden Nut 16 einen außendurchmesservergrößerten Bereich 17 auf, wodurch die Materialstärke des Verbindungskörpers 1 in diesem Bereich vergrößert ist.

Die Überwurfmutter 2 ist im Ausführungsbeispiel als Sechskantmutter ausgebildet und weist eine zylindrische Bohrung 21 auf, die mit einem Innengewinde 22 zum Aufschrauben auf ein Außengewinde 13 des Verbindungskörpers 1 versehen ist. An das Innengewinde 22 schließt sich ein sich zur kegeligen Bohrung 12 des Verbindungskörpers 1 entgegengesetzt verjüngend ausgebildeter Absatz 23 an.

Der Schneidring 3 ist in Wesentlichen hohlzylindrisch ausgebildet und weist an einem Ende eine keilförmig ausgebildete Seitenwand 31 auf. Die Neigung der keilförmigen Seitenwand 31 entspricht im Wesentlichen der Neigung des sich kegelig verjüngenden Absatzes 23 der Überwurfmutter 2. An seiner der Seitenwand 31 gegenüberliegenden Seite weist der Schneidring 3 einen durchmesserreduzierten Abschnitt 32 auf, an den sich ein in Richtung der Rotationsmittelachse des Schneidrings 3 geneigtes, wenigstens eine Schneide aufweisendes Schneidelement 33 anschließt.

In Figur 2 ist eine Verbindungsanordnung zweier Rohrstücke 5, 6 mit einer solchen Vorrichtung gezeigt. Dabei ist ein erstes Rohrstück 5 durch die Bohrung 21 einer Überwurfmutter 2 und den von dieser aufgenommenen Schneidring 3 in die Durchgangsbohrung 11 des Verbindungskörpers eingebracht, wo es an dem durch den durchmesserreduzierten Abschnitt 14 gebildeten Absatz 15 anliegt. Die Überwurfmutter 2 ist mit ihrem Innengewinde 22 auf das dieser zugewandte Außengewinde 13 des Verbindungskörpers 1 aufgeschraubt.

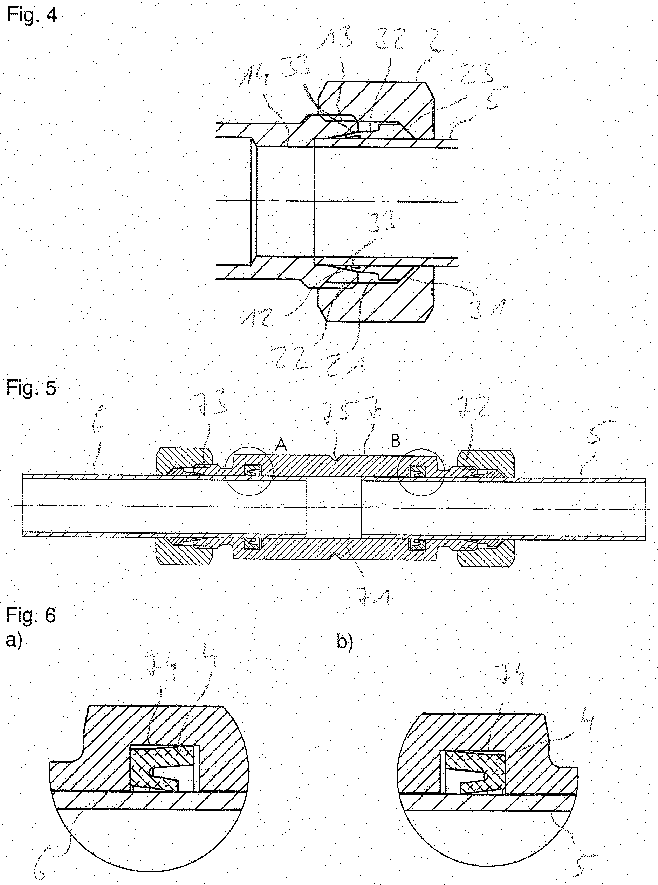

Beim Aufschrauben Überwurfmutter 2 auf das Außengewinde 13 des Verbindungskörpers 1 wird der mit seiner keilförmigen Seitenwand 31 an dem Absatz 23 der Überwurfmutter 2 anliegende Schneidring 3 axial in Richtung des Verbindungskörpers 1 verschoben, wodurch dessen Schneidelement 33 entlang der kegeligen Bohrung 14 des Verbindungskörpers 1 in Richtung des ersten Rohrstücks 5 geführt in dessen Mantelfläche einschneidet, wodurch eine metallisch dichtende Dichtung erzielt ist (vgl. Figur 4).

Das zweite Rohrstück 6 ist auf der gegenüberliegenden Seite des Verbindungskörpers 1 durch die Bohrung 21 einer zweiten Überwurfmutter 2 und den von dieser aufgenommenen Schneidring 3 in die Durchgangsbohrung 11 des Verbindungskörpers durch den von der Nut 16 aufgenommenen Dichtring 4 soweit eingebracht, bis ein gewünschter Längenausgleich erreicht ist, das heißt, bis die gewünschte Gesamtrohrlänge erzielt ist. In dieser Position ist die zweite Überwurfmutter 2 mit ihrem Innengewinde 22 auf das dieser zugewandte Außengewinde 13 des Verbindungskörpers 1 aufgeschraubt.

Beim Aufschrauben der zweiten Überwurfmutter 2 auf das Außengewinde 13 des Verbindungskörpers 1 wird der mit seiner keilförmigen Seitenwand 31 an dem Absatz 23 der Überwurfmutter 2 anliegende Schneidring 3 wiederum axial in Richtung des Verbindungskörpers 1 verschoben, wodurch dessen Schneidelement 33 entlang der kegeligen Bohrung 14 des Verbindungskörpers 1 in Richtung des zweiten Rohrstücks 5 geführt in dessen Mantelfläche einschneidet wodurch wiederum eine metallisch dichtende Dichtung erzielt ist. Zusätzlich ist durch den von der Nut 16 aufgenommenen Dichtring 4 eine weichdichtende Dichtung bewirkt (vgl. Figur 3).

Im Ausführungsbeispiel gemäß Figur 5 ist ein Verbindungskörper 7 angeordnet, der wiederum im Wesentlichen hohlzylindrisch ausgebildet ist und eine Durchgangsbohrung 71 auf weist, die an beiden Enden in eine sich nach außen hin erweiternde kegelige Bohrung 72 übergeht. Außen ist der Verbindungskörper 7 ebenfalls an beiden Enden mit einem Außengewinde 73 versehen. Im Gegensatz zu dem zuvor beschriebenen Ausführungsbeispiel ist hier jedoch kein durchmesserreduzierter, einen Absatz ausbildender Abschnitt vorhanden. Der Verbindungskörper 7 weist hingegen an beiden Enden in der Durchgangsbohrung 71 beabstandet zu der jeweiligen kegeligen Bohrung 72 eine radial umlaufende Nut 74 auf, in die jeweils ein Dichtring 4 eingebracht ist, der vorliegend wiederum als Lippendichtring ausgebildet ist. Außen weist der Verbindungskörper 7 einen gegenüber dem zuvor beschriebenen Ausführungsbeispiel bei gleichem Innendurchmesser einen größeren Außendurchmesser auf, wodurch die Materialstärke des Verbindungskörpers 7 vergrößert ist. Mittig ist in den Verbindungskörper eine umlaufende Rille 75 eingebracht, wodurch eine Orientierung für die Längsposition eines Rohrstücks gebildet ist.

Das erste Rohrstück 5 sowie auch das zweite Rohrstück 6 sind jeweils auf gegenüberliegenden Seiten des Verbindungskörpers 7 jeweils durch die Bohrung 21 einer Überwurfmutter 2 und den von dieser aufgenommenen Schneidring 3 in die Durchgangsbohrung 71 des Verbindungskörpers durch den auf der jeweiligen Seite von der Nut 74 aufgenommenen Dichtring 4 soweit eingebracht, bis ein gewünschter Längenausgleich erreicht ist, das heißt, bis die gewünschte Gesamtrohrlänge erzielt ist. In dieser Position werden die beiden Überwurfmuttern 2 mit ihrem Innengewinde 22 auf das dieser jeweils zugewandte Außengewinde 73 des Verbindungskörpers 7 aufgeschraubt. Der Verbindungskörper 7 dieses Ausführungsbeispiel ermöglicht somit eine axiale Längeneinstellung beider Rohrstücke 5, 6 innerhalb der Durchgangsbohrung 71.

Beim Aufschrauben der Überwurfmuttern 2 auf das jeweilige Außengewinde 73 des Verbindungskörpers 7 wird der jeweilige mit seiner keilförmigen Seitenwand 31 an dem Absatz 23 der Überwurfmutter 2 anliegende Schneidring 3 jeweils axial in Richtung des Verbindungskörpers 7 verschoben, wodurch dessen Schneidelement 33 entlang der jeweiligen kegeligen Bohrung 72 des Verbindungskörpers 7 in Richtung der Rille 75 geführt in die Mantelfläche des jeweiligen Rohrstücks 5, 6 einschneidet, wodurch wiederum eine metallisch dichtende Dichtung erzielt ist. Zusätzlich ist durch die von den Nuten 74 aufgenommenen Dichtringe 4 jeweils eine weichdichtende Dichtung bewirkt (vgl. Figur 6).

## Patentansprüche

1. Verbindungsanordnung, umfassend zwei vorzugsweise metallische Rohrstücke (5, 6), die über eine Vorrichtung miteinander verbunden sind, die folgende Bestandteile umfasst:
- einen Verbindungskörper (1, 7), durch den eine zylindrische Bohrung (11, 71) geführt ist, die an beiden Enden in eine sich nach außen erweiternde kegelige Bohrung (12, 72) übergeht und in der wenigstens eine radial umlaufende Nut (16, 74) angeordnet ist, in der ein Dichtring (4) zur Abdichtung gegenüber einem der in die Bohrung (11, 71) eingebrachten Rohrstücke (5, 6) angeordnet ist,
- zwei Überwurfmuttern (2), die jeweils eine Bohrung (21) zur Aufnahme eines der Rohrstücke (5, 6) aufweisen, die mit einem Innengewinde (22) versehen sind, mit dem sie auf ein jeweils endseitig an dem Verbindungskörper (1, 7) angeordnetes Außengewinde (13) aufschraubbar sind und die im Anschluss an das Innengewinde (22) einen vorzugsweise kegelig sich zur kegeligen Bohrung des Verbindungskörpers entgegengesetzt verjüngend ausgebildeten Absatz (23) aufweisen,
- zwei Schneidringe (3), die in der Bohrung (21) jeweils einer Überwurfmutter (2) angeordnet sind und die eine Bohrung zur Durchführung eines der Rohrstücke (5, 6) und ein wenigstens eine Schneide aufweisendes Schneidelement (33) aufweisen, das einem der durch die Bohrung durchgeführten Rohrstücke (5, 6) zugewandt ist und das im auf den Verbindungskörper (1, 7) aufgeschraubten Zustand der Überwurfmutter (2) in die kegelige Bohrung (12, 72) des Verbindungskörpers (1, 7) hineinragt,
wobei jeweils eines der Rohrstücke (5, 6) durch die Bohrung (21) der jeweiligen Überwurfmutter (2) und den von dieser aufgenommenen Schneidring (3) in die zylindrische Bohrung (11, 71) des Verbindungskörpers (1, 7) eingebracht ist und wobei die Überwurfmuttern (2) auf beiden Seiten des Verbindungskörpers (1, 7) auf diesen aufgeschraubt sind, wodurch die Schneidringe (3) mit ihrem Schneidelement (33) jeweils axial in eine der jeweiligen kegeligen Bohrungen (12, 72) eingepresst sind, wodurch das Schneidelement (33) der beiden Schneidringe (3) in die äußere Mantelschicht des jeweils aufgenommenen Rohrstücks (5, 6) einschneidend abdichtend in diese eingebracht ist, wobei in der zylindrischen Bohrung (11) des Verbindungskörpers (1) an einem ersten Ende beabstandet zu der kegeligen Bohrung (12) ein durchmesserreduzierter Abschnitt (14) vorhanden ist, durch den ein Anschlag gebildet ist, an dem das erste der Rohrstücke (5) anliegt, **dadurch gekennzeichnet, dass** das zweite Rohrstück (6) tiefer in die zylindrische Bohrung (11) des Verbindungskörpers (1) hineinragt, als das erste Rohrstück (5) und wobei zumindest das zweite Rohrstück (6) durch den in der radialen Nut (16) der Bohrung (11) angeordneten Dichtring (4) zusätzlich gegenüber dem Verbindungskörper (1) abgedichtet ist.

2. Verbindungsanordnung nach Anspruch 1, **dadurch gekennzeichnet, dass** der Verbindungskörper (1, 7) im Bereich der wenigstens einen Nut (16, 74) außendurchmesservergrößert ausgebildet ist.

3. Verbindungsanordnung nach Anspruch 1 oder 2, **dadurch gekennzeichnet, dass** der Verbindungskörper (1, 7) außen vorzugsweise in einem mittleren Abschnitt einen zumindest bereichsweise radial umlaufenden Steg oder eine zumindest bereichsweise radial umlaufende Rille (75) aufweist.

4. Verfahren zur Herstellung einer Verbindungsanordnung nach einem der Ansprüche 1 bis 3, wobei zunächst ein erstes Rohrstück (5) durch die Bohrung (21) einer Überwurfmutter (2) und des von dieser aufgenommenen Schneidrings (3) von einem ersten Ende in die zylindrische Bohrung (11, 71) des Verbindungskörpers (1, 7) eingebracht wird, wo es durch Aufschrauben der Überwurfmutter (2) auf den Verbindungskörper (1, 7) über das hierdurch in die kegelige Bohrung (12, 72) des Verbindungskörpers (1, 7) eingepresste Schneidelement (33) des Schneidrings (3) dichtend fixiert wird, wobei wenigstens eine Schneide des Schneidelements (33) in die äußere Mantelschicht des aufgenommenen Rohrstücks (5) einschneidet, wonach ein zweites Rohrstück (6) durch die Bohrung der anderen Überwurfmutter (2) und des von dieser aufgenommenen Schneidrings (3) von dem zweiten Ende in die zylindrische Bohrung (11, 71) des Verbindungskörpers (1) mit einer gewünschten Länge eingebracht wird, wobei es durch den in der radialen Nut (16, 74) der Bohrung (11, 71) angeordneten Dichtring (4) geschoben wird, wonach das zweite Rohrstück (6) durch Aufschrauben der zweiten Überwurfmutter (2) auf den Verbindungskörper (1) über das hierdurch wiederum in die kegelige Bohrung (12, 72) des Verbindungskörpers (1, 7) eingepresste Schneidelement (33) des Schneidrings (3) dichtend fixiert wird, wobei wenigstens eine Schneide des Schneidelements (33) in die äußere Mantelschicht des aufgenommenen Rohrstücks (6) einschneidet und wobei das erste Rohrstück (5) vor dessen Fixierung soweit in die zylindrische Bohrung (11) des Verbindungskörpers (1) eingeschoben wird, bis es an einem Absatz (15) anliegt, der durch einen an dem ersten Ende beabstandet zu der kegeligen Bohrung (12) vorhandenen durchmesserreduzierten Abschnitt (14) gebildet ist.

## Claims

1. Connecting device, comprising two preferably metallic pipe sections (5, 6) that are connected to each other via a device that comprises the following parts:
- a connection body (1, 7) through which a cylindrical bore (11, 71) is running that transitions into an outwardly expanding conical bore (12, 72) on both ends and in which at least one radially circumferential groove (16, 74) is arranged in which a sealing ring (4) is arranged for sealing against one of the pipe sections (5, 6) introduced into the bore (11, 71),
- two cap nuts (2) that each have a bore (21) to hold one of the pipe sections (5, 6) that are provided with a female thread (22) with which they can be screwed onto a male thread (13) arranged on the connection body (1, 7) on the respective end side and that have, following the female thread (22), a shoulder (23) formed preferably tapering conically opposite to the conical bore of the connection body,
- two cutting rings (3) that are arranged in the bore (21) of one cap nut (2) each and that have a bore for passing through one of the pipe sections (5, 6) and a cutting element (33) that has at least one blade, the cutting element facing one of the pipe sections (5, 6) fed through the bore and protruding into the conical bore (12, 72) of the connection body (1, 7) when the cap nut (2) is screwed onto the connection body (1, 7), where at least one of the pipe sections (5, 6) is introduced into the cylindrical bore (11, 71) of the connection body (1, 7) through the bore (21) of the respective cap nut (2) and the cutting ring (3) held by it and where the cap nuts (2) are screwed onto the connection body (1, 7) on both sides of it, which presses the cutting rings (3) with their cutting element (33) each axially into one of the respective conical bores (12, 71) of the connection body (1, 7), which causes the cutting element (33) of the two cutting rings (3) to be introduced into the outer jacket layer of the respective held pipe section (5, 6) in a cutting and sealing manner, where a diameter-reduced section (14) is present in the cylindrical bore (11) of the connection body (1) on a first end at a distance from the conical bore (12), which forms a stop that is in contact with the first one of the pipe sections (5), **characterised in that** the second pipe section (6) protrudes more deeply into the cylindrical bore (11) of the connection body (1) than the first pipe section (5) and where at least the second pipe section (6) is additionally sealed against the connection body (1) by the sealing ring (4) arranged in the radial groove (16) of the bore (11).

2. Connection device according to claim 1, **characterised in that** the connection body (1, 7) is formed with an enlarged outer diameter in the area of the at least one groove (16, 74).

3. Connection device according to claims 1 or 2, **characterised in that** the connection body (1, 7) has a radially circumferential web at least in an area or a radially circumferential notch (75) at least in an area on the outside, preferably in a middle section.

4. Method for producing a connection device according to one of claims 1 to 3, where first a first pipe section (5) is introduced from a first end into the cylindrical bore (11, 71) of the connection body (1, 7) through the bore (21) of a cap nut (2) and the cutting ring (3) held by it, and fixed there in a sealing manner by screwing the cap nut (2) onto the connection body (1, 7) over the cutting element (33) of the cutting ring (3) that is pressed into the conical bore (12, 72) of the connection body (1, 7) by this, where at least one blade of the cutting element (33) cuts into the outer jacket layer of the pipe section (5) that is held, following which a second pipe section (6) is introduced into the cylindrical bore (11, 71) of the connection body (1) from the second end with a desired length through the bore of the other cap nut (2) and the cutting ring (3) held by it, where it is pushed through the sealing ring (4) arranged in the radial groove (16, 74) of the bore (11, 71), following which the second pipe section (6) is fixed in a sealing manner by screwing on the second cap nut (2) onto the connection body (1) over the cutting element (33) of the cutting ring (3) that is pressed into the conical bore (12, 72) of the connection body (1, 7) by this in turn, where at least one blade of the cutting element (33) cuts into the outer jacket layer of the held pipe section (6) and where the first pipe section (5) is pushed into the cylindrical bore (11) of the connection body (1), before it is fixed, so far that it contacts a shoulder (15) that is formed by a diameter-reduced section (14) present on its first end at a distance from the conical bore (12).

## Revendications

1. Dispositif de raccordement comprenant deux tubes (5, 6) de préférence métalliques reliés ensemble par un dispositif comprenant les éléments constitutifs suivants :
- un corps de liaison (1, 7) traversé par un alésage cylindrique (11, 71) devenant aux deux extrémités un alésage conique (12, 72) qui s'agrandit en direction de l'extérieur, et dans lequel est disposée au moins une gorge (16, 74) au tracé radial, gorge dans laquelle est disposée une bague d'étanchéité (4) pour étancher par rapport à l'un des tubes (5, 6) introduits dans l'alésage (11, 71),
- deux écrous à collet (2) qui présentent respectivement un alésage (21) destiné à recevoir l'un des tubes (5, 6), qui sont munis d'une filetage intérieur (22) permettant de les visser sur un filetage extérieur (13) disposé respectivement à l'extrémité sur le corps de liaison (1, 7) et qui dans le prolongement du filetage intérieur (22) présentent un épaulement (23) de géométrie de préférence conique allant en s'amincissant en direction opposée à l'alésage conique du corps de liaison,
- deux bagues coupantes (3) qui sont disposées dans l'alésage (21) respectivement d'un écrou à collet (2) et qui présentent un alésage pour faire passer l'un des tubes (5, 6) et au moins un élément de coupe (33) présentant au moins un tranchant, élément qui regarde vers l'un des tubes (5, 6) guidés à travers l'alésage et qui, lorsque l'écrou à collet (2) se trouve à l'état vissé sur le corps de liaison (1, 7), fait saillie dans l'alésage conique (12, 72) du corps de liaison (1, 7), sachant que respectivement l'un des tubes (5, 6) est introduit - à travers l'alésage (21) de l'écrou à collet (2) respectif et à travers la bague coupante (3) logée dans cet écrou - dans l'alésage cylindrique (11, 71) du corps de liaison (1, 7) et sachant que les écrous à collet (2) situés sur les deux côtés du corps de liaison (1, 7) sont vissés sur celui-ci, faisant que les bagues coupantes (3) avec leur élément de coupe (33) sont forcées à pénétrer axialement, respectivement, dans l'un des alésages (12, 71) coniques respectifs du corps de liaison (1, 7), faisant que l'élément de coupe (33) des deux bagues coupantes (3) est - en entaillant et en étanchant la couche enveloppante externe du tube (5, 6) - respectivement introduit dans cette dernière, sachant que dans l'alésage cylindrique (11) du corps de liaison (1), à une première extrémité distante de l'alésage conique (12), est présent un segment (14) d'un diamètre réduit formant une butée contre laquelle le premier des tubes (5), applique, **caractérisé en ce que** le deuxième tube (6) fait saillie plus profondément dans l'alésage cylindrique (11) du corps de liaison (1) que le premier tube (5) et sachant qu'au moins le deuxième tube (6) est étanché en plus - au moyen de la bague d'étanchéité (4) disposée dans la gorge radiale (16) de l'alésage (11) - par rapport au corps de liaison (1).

2. Dispositif de raccordement selon la revendication 1, **caractérisé en ce que** le corps de liaison (1, 7) est configuré d'un diamètre extérieur agrandi dans la zone d'au moins une gorge (16, 74).

3. Dispositif de raccordement selon la revendication 1 ou 2, **caractérisé en ce que** le corps de liaison (1, 7) présente à l'extérieur, de préférence dans un segment médian, au moins localement une nervure au tracé périphérique radial, ou au moins localement une rainure (75) au tracé périphérique radial.

4. Procédé de production d'un dispositif de raccordement selon l'une des revendications 1 à 3, sachant que d'abord un premier tube (5) est introduit depuis une première extrémité - à travers l'alésage (21) d'un écrou à collet (2) et de la bague coupante (3) reçue par ledit écrou - dans l'alésage cylindrique (11, 71) du corps de liaison (1, 7), faisant qu'il est immobilisé et rendu étanche - via élément de coupe (33) de la bague coupante (3) forcé à pénétrer dans l'alésage conique (12, 72) du corps de liaison - en vissant l'écrou à collet (2) sur le corps de liaison (1,7), sachant qu'au moins un tranchant de l'élément de coupe (33) incise dans la couche enveloppante extérieure du tube (5) reçu, ce après quoi un deuxième tube (6) est introduit - depuis la deuxième extrémité dans l'alésage cylindrique (11, 71) du corps de liaison (1) - sur une longueur souhaitée dans l'alésage de l'autre écrou à collet (2) et de la bague coupante (3) logée dans ledit écrou, sachant qu'il est poussé par la bague d'étanchéité (4) disposée dans la gorge radiale (16, 74) de l'alésage (11, 71), ce après quoi le deuxième tube (6) est immobilisé et rendu étanche - par vissage du deuxième écrou à collet (2) sur le corps de liaison (1) - via l'élément de coupe (33) de la bague coupante (3) ainsi forcé à son tour à pénétrer dans l'alésage conique (12, 72) du corps de liaison (1, 7), sachant qu'au moins un tranchant de l'élément de coupe (33) incise dans la couche enveloppante extérieure du tube (6) reçu et sachant que le premier tube (5) est enfoncé, avant son immobilisation, dans l'alésage cylindrique (11) du corps de liaison (1) au point qu'il applique contre un épaulement (15) qui est formé par un segment (14) d'un diamètre réduit présent au niveau de la première extrémité, à distance de l'alésage conique (12).
